# EUROPEAN PATENT SPECIFICATION

(11) **EP 1 478 132 B1**
(45) Date of publication and mention of the grant of the patent: **07.11.2007**
(21) Application number: 03010896.3
(22) Date of filing: 15.05.2003
(51) Int. Cl.: H04L 12/56, H04L 9/08, H04L 29/06

(54) **Secure communication initiation**
Gesicherte Kommunikationseinleitung
Mise en train d'une communication protégée

(43) Date of publication of application: 17.11.2004
(73) Proprietor: Sony Ericsson Mobile Communications AB, 221 88 Lund (SE)
(72) Inventor: Börjeson, Henrik, 222 40 Lund (SE); Jendbro, Magnus, 224 73 Lund (SE)
(74) Representative: Dahnér, Christer

(56) References cited:
- EP-A- 0 756 397
- EP-A- 1 274 194
- WO-A-02/03625
- US-A1- 2002 065 099

## Description

### TECHNICAL FIELD OF THE INVENTION

The present invention relates to initiating of a communication session for exchange of communication information. More particularly it relates to a method and a device to initiate a short range high-frequency communication session, such as a Bluetooth^{™} communication session, between any two communication devices suited for such communication.

### DESCRIPTION OF RELATED ART

Safe exchange of information between various communication devices nowadays requires a high degree of security. For instance, in order to establish a secure relationship between two Bluetooth^{™} communication devices pairing of said devices must be performed. This means that the said devices exchange a shared key that later can be used to authenticate the devices and encrypt any subsequent communication.

Establishing a secure relationship generally requires the users to take a number of steps such as menu browsing, setting devices in pairable/searchable mode and finally typing a shared password. A pairing process typically takes minutes from start to stop. Mistyping and misinterpretation of required input data leads to failure of pairing. Confusion resulting in mix-ups of 0(s) with o(s), of 1(s) with I(s), of upper case with lower case, also leads to error in establishing the secure relationship. Furthermore, some communication devices such as headsets have preinstalled passwords, which requires accessing the passwords over other media. Moreover, password security may be hampered due to user's tendency to use short passwords that are easy to remember or easy to enter using communication devices having limited man machine interfaces (MMI).

From the European patent application EP 1 274 194 it is known wireless data communication including infrared communication between a device and a station. A wireless request-response communication between the device and the station is performed to determine whether the station can communicate with infrared radiation. If infrared-ray communication can be performed, the device performs infrared paging, awaits an infrared page response from the station, whereafter the device will operate so that the station can be connected to the device by encrypted Bluetooth wireless radio communication.

The communication as explained above is complicated as it involves wireless communication as well as infrared-ray communication between the device and the station. This type of communication also has the drawback in that it is not immediately obvious which devices are involved in communication with one another, during initiation of the encrypted wireless radio communication.

There is thus a need for easily providing a secure relationship between authenticated communication devices.

### SUMMARY OF INVENTION

The present invention is thus directed towards solving the problem of easily providing a secure relationship between authenticated communication devices.

This is achieved by providing initiating of a secure communication session between two communication devices in physical contact.

One object of the present invention is to provide a method for easily obtaining a secure relationship between two communication devices.

According to a first aspect of this invention, this object is achieved by a method for at least partially initiating a communication session between a first communication device and a second communication device, where each device has a dedicated contact surface, comprising the step of initiating a communication session between said communication devices, wherein the step of initiating includes:
detecting that the dedicated contact surface of the first communication device and the dedicated contact surface of the second communication device are in contact with each other, so as to enable wireless communication between said first and second communication device.

A second aspect of the present invention is directed towards a method including the features of the first aspect, in which the step of initiating includes detecting that the dedicated contact surface of the first communication device and the dedicated contact surface of the second communication device are in physical or optical contact with each other.

A third aspect of the present invention is directed towards a method including the features of the first aspect, in which the step of initiating is performed over the contact interface between the dedicated contact surface of the first communication device and the dedicated contact surface of the second communication device.

A fourth aspect of the present invention is directed towards a method including the features of the first aspect, wherein the step of initiating, performed over the contact interface between the dedicated contact surface of the first communication device and the dedicated contact surface of the second communication device, comprises the step of negotiating between said two communication devices, to determine which one of the devices will take an initiator role.

A fifth aspect of the present invention is directed towards a method including the features of the fourth aspect, wherein the step of negotiating includes determining which one of the devices will take an acceptor role.

A sixth aspect of the present invention is directed towards a method including the features of the fifth aspect, wherein the step of initiating, performed over the contact interface between the dedicated contact surface of the first communication device and the dedicated contact surface of the second communication device, comprises the step of exchanging authentication information between the two communication devices, of which one has the initiator role and the other has an acceptor role.

A seventh aspect of the present invention is directed towards a method including the features of the first aspect, further comprising the step of continuing the communication session over a wireless interface between said two communication devices.

Another object of the present invention is to provide a communication control device that easily enables a secure relationship between two communication devices.

According to an eighth aspect of the present invention, this object is achieved by a communication control device for initiating a secure communication session between said communication control device and one other communication control device, said communication control device comprising:
a dedicated contact surface provided for contacting a dedicated contact surface of the other communication control device,
a control unit connected to the dedicated contact surface, initiating communication by detecting contact between the dedicated contact surface of said communication device and the dedicated contact surface of the other communication device,
for connecting to a wireless communication unit to enable wireless communication over a wireless interface between the wireless communication unit associated with said communication control device and a wireless communication unit associated with the other communication control device.

A ninth aspect of the present invention is directed towards a communication control device including the features of the eighth aspect, further comprising the wireless communication unit for enabling wireless communication over the wireless interface between the wireless communication unit of the communication control device and the wireless communication unit associated to the other communication control device,
wherein the dedicated contact surface and the wireless communication unit are connected to the control unit.

A tenth aspect of the present invention is directed towards a communication control device including the features of the eighth aspect, in which the control unit is initiating communication over the contact interface between the contacting contact surface of said communication control device and said contacting contact surface of the other communication control device.

An eleventh aspect of the present invention is directed towards a communication control device including the features of the eighth aspect, wherein at least part of the dedicated contact surface of the communication control device is able to conduct electric current.

Another object of the present invention is to provide a portable communication device that easily enables a secure relationship between two communication devices.

According to a twelfth aspect of the present invention, this object is achieved by a portable communication device arranged to communicate with at least one other portable communication device, wherein said portable communication device comprises a communication control unit that initiates a secure communication session between said communication control device and a communication control device of the other portable communication device, said communication control device of the portable communication device comprising:
a dedicated contact surface provided for contacting a dedicated contact surface of the other communication control device,
a control unit connected to the dedicated contact surface, for detecting contact over the contact interface between the dedicated contact surface of said communication control device and the dedicated contact surface of said other communication control device,
for coupling to a wireless communication unit to enable wireless communication over the wireless interface between the wireless communication unit of said communication control device and a wireless communication unit associated to said other communication control device.

A thirteenth aspect of the present invention is directed towards a portable communication device including the features of the twelfth aspect, in which the dedicated contact surface is provided for physically or optically contacting a dedicated contact surface of the other communication control device, and the control unit connected to the dedicated contact surface, is provided for detecting physical or optical contact over the contact interface between the dedicated contact surface of said communication control device and the dedicated contact surface of said other communication control device.

A fourteenth aspect of the present invention is directed towards a portable communication device including the features of the twelfth aspect, further comprising a wireless communication unit for enabling wireless communication over said wireless interface between the wireless communication unit of the portable communication device and the wireless communication unit associated with one other portable communication device,
wherein the dedicated contact surface and the wireless communication unit of the portable communication device are connected to the control unit.

A fifteenth aspect of the present invention is directed towards a portable communication device including the features of the twelfth aspect, for which said wireless communication unit is a Bluetooth^{™} unit.

A sixteenth aspect of the present invention is directed towards a portable communication device including the features of the twelfth aspect, wherein the portable communication device is a mobile telephone.

A seventeenth aspect of the present invention is directed towards a portable communication device including the features of the twelfth aspect, wherein at least part of the dedicated contact surface of the portable communication device is protruding from an exterior surface of the portable communication device, for enabling physical contact over the contact interface between the dedicated contact surface of the portable communication device and a dedicated contact surface of the other portable communication device.

An eighteenth aspect of the present invention is directed towards a portable communication device including the features of the twelfth aspect, wherein at least part of the dedicated contact surface of the portable communication device is protrudable from an exterior surface of the portable communication device, for enabling the physical contact over the contact interface between the dedicated contact surface of the communication device and a dedicated contact surface of one other communication device.

A nineteenth aspect of the present invention is directed towards a portable communication device including the features of the twelfth aspect, wherein at least part of the dedicated contact surface of the portable communication device has a convex shape from an exterior surface, for enabling physical contact over the contact interface between the dedicated contact surface of the communication device and a dedicated contact surface of one other communication device.

Another object of the present invention is to provide a communication system that easily enables a secure relationship between two communication devices.

According to a twentieth aspect of the present invention this object is achieved by a communication system, comprising at least a first portable communication device and a second portable communication device, wherein both portable communication devices include the features of the twelfth aspect, for initiating a secure communication session between said communication devices.

The present invention has the following advantages over the state of the art.

Firstly, the security of the communication session is improved in terms of the authentication of the communication devices being connected to each other since it is visible when and with which other device(s) the physical contacting is made.
Secondly, long random passwords can be used as for instance authentication information more generally, without the need for the user to enter them manually.
Thirdly, the communication devices do not have to be in a current-consuming inquiry scanning mode, since the initiating of a secure communication session is triggered upon physical contacting of the communication devices.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a communication control device;
fig. 2 shows a method for at least partially initiating a communication session;
fig. 3a and 3b schematically show initiating a secure communication session between two communication control devices, comprised in a communication system; and
fig. 4 shows a system comprising two portable communication devices during the initial part of initiating a secure communication session between the two portable devices.

### DETAILED DESCRIPTION OF THE EMBODIMENTS

The present invention relates to the provision of initiating a secure communication session between two communication devices.

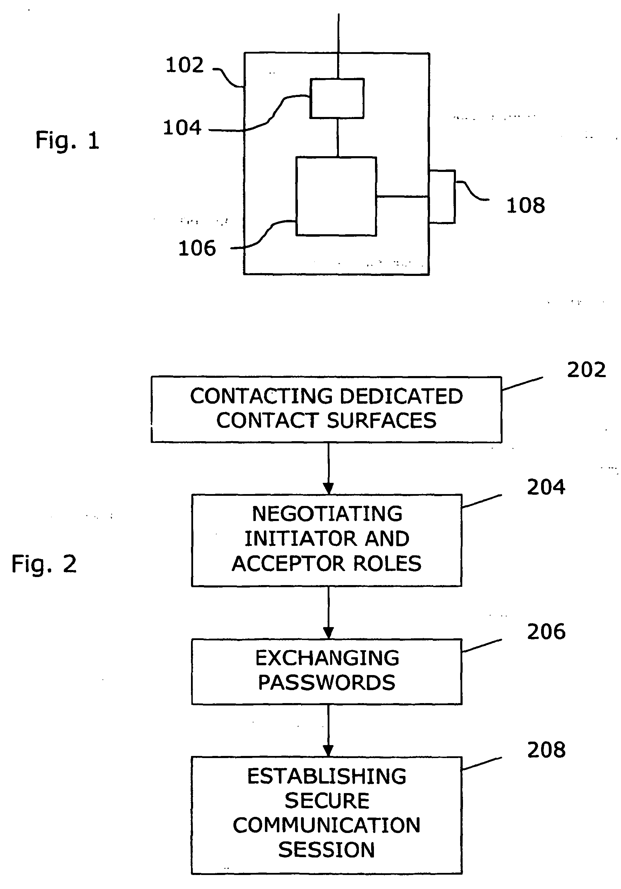

Reference will now be given to fig. 1 showing a communication control device according to one preferred embodiment of the invention. In this figure, the communication control device, 102, is controlled by a control unit, 106, included in said communication control device, 102. Said communication control device, 102, also comprises a wireless communication unit, 104, that is connected to the control unit, 106. The communication control device, 102, also includes a contact surface, 108, that is connected to the control unit, 106.

According to this preferred embodiment of the present invention the wireless communication unit, 104, is comprised in the communication control device, 102. According to the same preferred embodiment said wireless communication unit is a Bluetooth^{™} unit. Moreover, the communication control device, 102, comprises the dedicated contact surface, 108, according to said preferred embodiment.

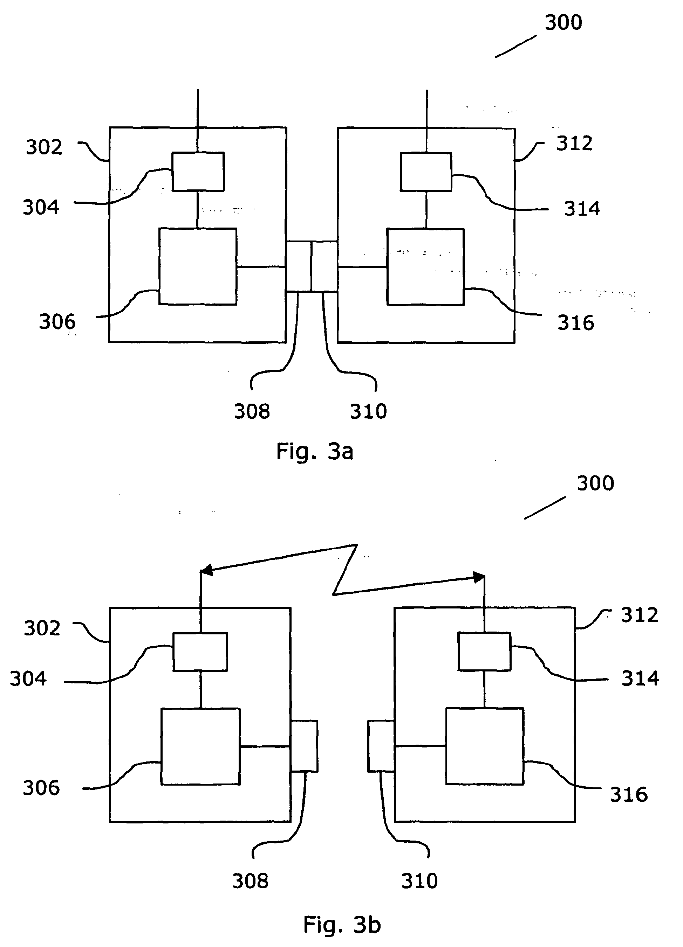

Figure 2 presents a flow-chart of a method for initiating a secure communication session between two communication devices. Reference will also be given to figures 3a and 3b, schematically showing a communication system, 300, comprising two communication control devices, 302 and 312. These devices are both of the same type as the one shown in fig. 1. Fig. 3a shows physical contacting, i.e. a contact interface, between a dedicated contact surface, 308, of one communication control device, 302, and a dedicated contact surface, 310, of another communication control device, 312. Fig. 3b shows the two communication control devices, 302 and 312, during communicating over a wireless communication interface. According to this preferred embodiment the communication system, 300, comprises two communication control devices, 302 and 312.

With reference to fig. 2 and figs. 3a, the method for at least partially initiating a secure communication session will now be explained. This method starts by contacting, the dedicated contact surfaces, 308 and 310, step 202, of the first and second communication control devices, 302 and 312, respectively, with each other, as shown in fig. 3a. This contacting over the contact interface is detected by the control units, 306 and 316, of the first and second communication devices, 302 and 312, respectively, which contacting triggers said control units, 306 and 316, to further initiate communication and to start negotiating, between the two communication control devices, 302, and 312, step 204, over the contact interface. During this negotiating, step 204, it is determined which one of the two communication control devices, 302 and 312, will take the initiator role and which one of the two devices, 302 and 312, will take the acceptor role. Upon deciding the initiator and the acceptor roles by the control units, 306 and 316, exchanging passwords between the two communication control devices, 302 and 312, is performed, step 206. These exchanged passwords are used for mutual authentication of the two communication control devices, 302 and 312. Having exchanged the passwords, establishing a secure communication session between the two communication devices, 302 and 312, step 208, is performed.

According to this preferred embodiment at least part of the dedicated contact surface, 308, of the communication device, 302, is able to conduct electric current to allow communication over the contact interface between the two dedicated contact surfaces, 308 and 310.

According to a preferred embodiment the contact between the two contact surfaces, 308 and 310, is maintained until the completion of step 206, i.e. the exchanging of passwords between the two communication devices, 302 and 310. The following establishing of a secure communication session, step 208, comprises questioning the users of the two communication control devices, 302 and 312, whether they intend to continue communicating by using a secure communication session over a wireless communication interface or not.

In this embodiment said questioning is in itself communicated over said wireless interface.

If both answers from the users are affirmative the established communication session over the wireless interface is continued over said interface, fig. 3b, else said already established wireless communication session is terminated.

Any wireless communication during a communication session over said wireless communication interface between said communication device, 302, and said other communication device, 312, is communicated via antennas, of which each one of said communication devices, 302 and 312, is equipped with one such antenna.

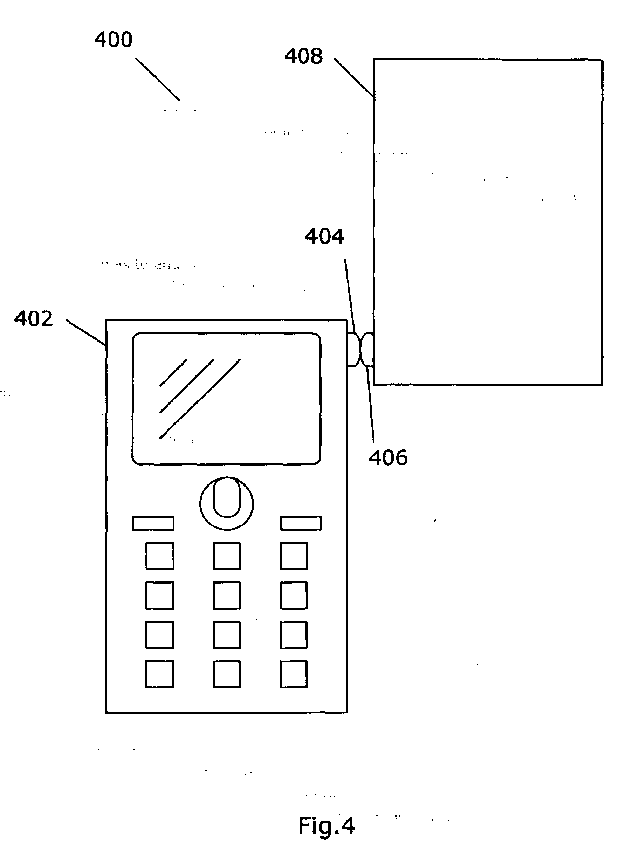

Fig. 4 shows a first portable communication device, 402, comprising a dedicated contact surface, 404, which first portable communication device, 402, is able to establish a secure communication session with one other portable communication device, 408. This establishing initially requires physical contacting between a dedicated contact surface, 404, of said portable communication device, 402, with a dedicated contact surface, 406, of the other portable communication device, 408.

Moreover, according to this embodiment the dedicated contact surface, 404, of one portable communication device, 402, has a convex shape directed outwards from an exterior surface of the portable communication device, 402, for enabling the physical contact over the contact interface between the dedicated contact surface, 404, of said portable communication device, 402, and a dedicated contact surface, 406, of one other portable communication device, 408.

According to said preferred embodiment of the present invention each one of the two portable communication devices, 402 and 408, further comprises a communication control device, where each one of said two communication control devices includes a control unit and a wireless communication unit (not shown in fig. 4).

According to this preferred embodiment of the present invention the dedicated contact surface, 404, is in this respect considered to be comprised in the portable communication device, 402.

According to this preferred embodiment this portable communication device, 402, is a mobile telephone.

It is emphasized that this invention can be varied in many ways, of which the alternative embodiments below only are examples of a few. These different embodiments are hence non-limiting examples. The scope of this present invention, however, is only limited by the subsequently following patent claims.

The portable communication device can be any one of a variety of device like a Laptop computer, a personal digital assistant (PDA), a printer or a similar device or another type of portable device with which a user might may want to initiate a secure connection with,

In another embodiment establishing the secure communication session comprises continuing the communicating over the contacting surface interface, provided that said contact between the dedicated contact surfaces is not interrupted after the step of exchanging passwords has been performed.

According to another embodiment of the present invention, establishing the secure communication, when initiating a communication session, comprises questioning the user of the contacting portable communication device, only, whether he intend to continue communicating by using a secure communication session over a wireless communication interface or not.

According to yet another embodiment of the present invention, the establishing of the secure communication when initiating a communication session comprises continuing the communicating by using a secure communication session over a wireless communication, without the need of any user input.

According to yet another embodiment of the present invention the dedicated contact surface of a portable communication device is protruding outwards from an exterior surface of the portable communication device, for enabling physical contacting over the contacting interface between the dedicated contact surface of said portable communication device and a dedicated contact surface of one other portable communication device. If each dedicated contact surface protrudes outwards from an exterior surface of the associated portable communication device, each communication device can mate any other communication device and thereby establish contacting between the corresponding dedicated contact surfaces.

According to still yet another embodiment of the present invention the dedicated contact surface of the portable communication device is protrudable outwards from an exterior surface of the portable communication device, for enabling physical contacting over the contacting interface between the dedicated contact surface of the communication device and a dedicated contact surface of one other communication device.

According to a different embodiment of the present invention the dedicated contact surfaces are provided for optically contacting each other over the contact interface, by using for instance infra-red light.

According to a different embodiment of the present invention the dedicated contact surface is comprised in the wireless communication unit.

According to another embodiment of the invention, the wireless communication unit can be any wireless unit, for instance a WLAN unit.

According to a different embodiment of said invention the wireless communication unit is connectable to a communication control unit.

According to yet a different embodiment the wireless communication unit is connectable to a portable communication device.

According to still yet another embodiment of the present invention the communication control device is comprised in a wireless communication unit.

According to another embodiment of the present invention the communication control device is connectable to a portable communication device.

With the present invention has thus been described a method and a device for initiating a secure communication session, which method and device have the following advantages:

The security of the communication session is improved in terms of the authentication of the communication devices being connected to each other since it is visible when and with which other device(s) the pairing is made, as the communication devices physically contact each other.

As there is no need for the user to enter any passwords manually, long random passwords can easily more generally be used, as for instance authentication information.

As the physical contacting of the dedicated contact surfaces, triggers the control devices to start negotiating between said communication devices, said devices do not need to have an inquiry scanning status. This is very beneficial, since the inquiry scanning status is current-consuming. A direct consequence of this fact is that a communication device according to this invention is consuming less current.

## Claims

1. Method for at least partly initiating a communication session between a first communication device (102, 302; 402) and a second communication device (312; 408),
**characterized in that**,
the step of initiating a communication session between said communication devices (102, 302, 312; 402, 408), each having a dedicated contact surface (108, 308, 310; 404, 406), includes the step of detecting that the dedicated contact surface (108, 308; 404) of the first communication device (102, 302; 402) and the dedicated contact surface (310; 406) of the second communication device (312; 408) are in physical contact with each other,
so as to enable wireless communication between said first (102, 302; 402) and second (312; 408) communication device.

2. Method according to claim 1,
**characterized in that**,
in which the step of initiating is performed over the contact interface between the dedicated contact surface (108, 308; 404) of the first communication device (102, 302; 402) and the dedicated contact surface (310; 406) of the second communication device (312; 408).

3. Method according to claim 2,
**characterized in that**,
the step of initiating comprises the step of negotiating between said two communication devices (102, 302, 312; 402, 408), to determine which one of the devices will take an initiator role, (step 204).

4. Method according to claim 3,
**characterized in that**,
the step of negotiating (step 204) includes determining which one of the devices (102, 302, 312; 402, 408) will take an acceptor role.

5. Method according to claim 4, **characterized in that**,
the step of initiating comprises the step of exchanging authentication information (step 206) between the two communication devices (102, 302, 312; 402, 408), of which one has the initiator role and the other has an acceptor role.

6. Method according to any of claims 1-5,
**characterized in that**,
it comprises the step of continuing the communication session over a wireless interface between said two communication devices (102, 302, 312; 402, 408).

7. Communication control device (102, 302) for initiating a secure communication session between said communication control device (102, 302) and one other communication control device (312),
**characterized in that**,
the communication control device (102, 302) comprises:
- a dedicated contact surface (108, 308) provided for physically contacting a dedicated contact surface (310) of the other communication control device (312),
- a control unit (106, 306) connected to the dedicated contact surface (108, 308), initiating communication by detecting physical contact between the dedicated contact surface (108, 308) of said communication device (102, 302) and the dedicated contact surface (310) of the other communication control device (312),
for connecting to a wireless communication unit to enable wireless communication over a wireless interface between the wireless communication unit (104, 304) associated with said communication control device (102, 302) and a wireless communication unit (314) associated with the other communication control device (312).

8. Communication control device (102, 302) according to claim 7,
**characterized in that**,
the communication control device comprises:
- the wireless communication unit (104, 304) for enabling wireless communication over the wireless interface between the wireless communication unit (104, 304) of the communication control device (102, 302) and the wireless communication unit (314) associated to said one other communication control device (312),
wherein the dedicated contact surface (108, 308) and the wireless communication unit (104, 304) are connected to the control unit (106, 306).

9. Communication control device (102, 302) according to claim 7 or 8,
**characterized in that**,
the control unit (106, 306) is initiating communication over the contact interface between the dedicated contact surface (108, 308) of said communication control device (102, 302) and said dedicated contact surface (310) of the other communication control device (312).

10. Communication control device (102, 302) according to any one of claims 7-9,
**characterized in that**,
at least part of the dedicated contact surface (108, 308) of the communication control device (102, 302) is able to conduct electric current.

11. Portable communication device (402) arranged to communicate with at least one other portable communication device (408),
**characterized in that**,
said portable communication device (402) comprises a communication control unit (106, 306) that initiates a secure communication session between said communication control device (102, 302), according to claim 7 and a communication control device (312) of the other portable communication device (408).

12. Portable communication device (402), according to claim 11,
**characterized in that**,
said wireless communication unit (104, 304) is a Bluetooth^{®} Wireless Technology unit.

13. Portable communication device (402), according to claim 11 or 12,
**characterized in that,**
the portable communication device (402) is a mobile telephone.

14. Portable communication device (402), according to any one of claims 11-13,
**characterized in that**,
at least part of the dedicated contact surface (108, 308; 404) of the portable communication device (402) is protruding from an exterior surface of the portable communication device (402), for enabling physical contact between the dedicated contact surface (108, 308; 404) of the portable communication device (402) and a dedicated contact surface (310; 406) of the other portable communication device (408).

15. Portable communication device (402), according to any one of claims 11-13,
**characterized in that**,
at least part of the dedicated contact surface (108, 308; 404) of the portable communication device (402) is protrudable from an exterior surface of the portable communication device (402), for enabling physical contact over the contact interface between the dedicated contact surface (108, 308; 404) of the portable communication device (402) and a dedicated contact surface (310; 406) of the other portable communication device (408).

16. Portable communication device (402), according to any one of claims 11-13,
**characterized in that**,
at least part of the dedicated contact surface (108, 308; 404) of the portable communication device (402) has a convex shape from an exterior surface, for enabling physical contact over the contact interface between the dedicated contact surface (108, 308; 404) of the portable communication device (402) and a dedicated contact surface (310; 406) of the other portable communication device (408).

17. Communication system (300; 400) comprising at least a first portable communication device (402) and a second portable communication device (408),
**characterized in that**,
both portable communication devices (402, 408) are according to any one of claims 11-16, for initiating a secure communication session between said portable communication devices (402, 408).

## Patentansprüche

1. Verfahren zur zumindest teilweisen Initialisierung einer Kommunikationssitzung zwischen einem ersten Kommunikationsgerät (102, 302; 402) und einem zweiten Kommunikationsgerät (312; 408),
**dadurch gekennzeichnet, dass**
der Schritt der Initialisierung einer Kommunikationssitzung zwischen den Kommunikationsgeräten (102, 302, 312; 402, 408), welche jeweils eine bezeichnete Kontaktfläche (108, 308, 310; 404, 406) aufweisen, den Schritt der Erkennung enthält, dass die bezeichnete Kontaktfläche (108, 308; 404) des ersten Kommunikationsgeräts (102, 302; 402) und die bezeichnete Kontaktfläche (310, 406) des zweiten Kommunikationsgeräts (312; 408) zueinander in physischem Kontakt stehen,
so dass eine Funkkommunikation zwischen dem ersten (102, 302; 402) und dem zweiten (312; 408) Kommunikationsgerät ermöglicht wird.

2. Verfahren nach Anspruch 1,
**dadurch gekennzeichnet, dass**
der Schritt der Initialisierung über die Kontaktschnittstelle zwischen der bezeichneten Kontaktfläche (108, 308; 404) des ersten Kommunikationsgeräts (102, 302; 402) und der bezeichneten Kontaktfläche (310, 406) des zweiten Kommunikationsgeräts (312; 408) erfolgt.

3. Verfahren nach Anspruch 2,
**dadurch gekennzeichnet, dass**
der Schritt der Initialisierung den Schritt der Verhandlung zwischen den beiden Kommunikationsgeräten (102, 302, 312; 402, 408) enthält, um festzulegen, welches der Geräte eine Initiatorrolle übernimmt, (Schritt 204).

4. Verfahren nach Anspruch 3,
**dadurch gekennzeichnet, dass**
der Schritt der Verhandlung (Schritt 204) die Festlegung enthält, welches der Geräte (102, 302, 312; 402, 408) eine Empfängerrolle übernimmt.

5. Verfahren nach Anspruch 4,
**dadurch gekennzeichnet, dass**
der Schritt der Initialisierung den Schritt des Austauschs von Authentisierungsinformationen (Schritt 206) zwischen den beiden Kommunikationsgeräten (102, 302, 312; 402, 408) enthält, von denen eines die Initiatorrolle und das andere die Empfängerrolle hat.

6. Verfahren nach einem der Ansprüche 1 bis 5,
**dadurch gekennzeichnet, dass**
es den Schritt der Fortsetzung der Kommunikationssitzung über eine Funkschnittstelle zwischen den beiden Kommunikationsgeräten (102, 302, 312; 402, 408) enthält.

7. Kommunikationssteuergerät (102, 302) zur Initialisierung einer sicheren Kommunikationssitzung zwischen dem Kommunikationssteuergerät (102, 302) und einem anderen Kommunikationssteuergerät (312),
**dadurch gekennzeichnet, dass**
das Kommunikationssteuergerät (102, 302) enthält:
- eine bezeichnete Steueroberfläche (108, 308) für den physischen Kontakt mit einer bezeichneten Steueroberfläche (310) des anderen Kommunikationssteuergeräts (312),
- eine mit der bezeichneten Steueroberfläche (108, 308) verbundene Steuereinheit (106, 306), welche die Kommunikation initialisiert, indem sie den physischen Kontakt zwischen der bezeichneten Kontaktfläche (108, 308) des Kommunikationsgeräts (102, 302) und der bezeichneten Kontaktfläche (310) des anderen Kommunikationsgeräts (312) erkennt, um eine Verbindung zu einer Funkkommunikationseinheit herzustellen, damit eine Funkkommunikation über eine Funkschnittstelle zwischen der dem Kommunikationssteuergerät (102, 302) zugeordneten Funkkommunikationseinheit (104, 304) und einer dem anderen Kommunikationssteuergerät (312) zugeordneten Funkkommunikationseinheit (314) zu ermöglichen.

8. Kommunikationssteuergerät (102, 302) nach Anspruch 7,
**dadurch gekennzeichnet, dass**
das Kommunikationssteuergerät enthält:
- die Funkkommunikationseinheit (104, 304) zur Herstellung einer Funkkommunikation über die Funkschnittstelle zwischen der Funkkommunikationseinheit (104, 304) des Kommunikationssteuergeräts (102, 302) und der Funkkommunikationseinheit (314) des anderen Kommunikationssteuergeräts (312),
wobei die bezeichnete Kontaktfläche (108, 308) und die Funkkommunikationseinheit (104, 304) mit der Steuereinheit (106, 306) verbunden sind.

9. Kommunikationssteuergerät (102, 302) nach Anspruch 7 oder 8,
**dadurch gekennzeichnet, dass**
die Steuereinheit (106, 306) die Kommunikation über die Kontaktschnittstelle zwischen der bezeichneten Kontaktfläche (108, 308) des Kommunikationssteuergeräts (102, 302) und der bezeichneten Kontaktfläche (310) des anderen Kommunikationssteuergeräts (312) initialisiert.

10. Kommunikationssteuergerät (102, 302) nach einem der Ansprüche 7 bis 9,
**dadurch gekennzeichnet, dass**
zumindest ein Teil der bezeichneten Kontaktfläche (108, 308) des Kommunikationssteuergeräts (102, 302) elektrisch leitfähig ist.

11. Tragbares Kommunikationsgerät (402), welches mit mindestens einem anderen tragbaren Kommunikationsgerät (408) kommunizieren kann,
**dadurch gekennzeichnet, dass**
das tragbare Kommunikationsgerät (402) eine Kommunikationssteuereinheit (106, 306) enthält, welche eine sichere Kommunikationssitzung zwischen der Kommunikationssteuereinheit (102, 302) nach Anspruch 7 und einer Kommunikationssteuereinheit (312) des anderen tragbaren Kommunikationsgeräts (408) initialisiert.

12. Tragbares Kommunikationsgerät (402) nach Anspruch 11,
**dadurch gekennzeichnet, dass**
der Funkkommunikationseinheit (104, 304) die Bluetooth® Wireless Technology zugrunde liegt.

13. Tragbares Kommunikationsgerät (402) nach Anspruch 11 oder 12,
**dadurch gekennzeichnet, dass**
das tragbare Kommunikationsgerät (402) ein Mobiltelefon ist.

14. Tragbares Kommunikationsgerät (402) nach einem der Ansprüche 11 bis 13,
**dadurch gekennzeichnet, dass**
mindestens ein Teil der bezeichneten Kontaktfläche (108, 308; 404) des tragbaren Kommunikationsgeräts (402) aus einer Außenfläche des tragbaren Kommunikationsgeräts (402) herausragt, um den physischen Kontakt zwischen der bezeichneten Kontaktfläche (108, 308; 404) des tragbaren Kommunikationsgeräts (402) und einer bezeichneten Kontaktfläche (310; 406) des anderen tragbaren Kommunikationsgeräts (408) zu ermöglichen.

15. Tragbares Kommunikationsgerät (402) nach einem der Ansprüche 11 bis 13,
**dadurch gekennzeichnet, dass**
mindestens ein Teil der bezeichneten Kontaktfläche (108, 308; 404) des tragbaren Kommunikationsgeräts (402) aus einer Außenfläche des tragbaren Kommunikationsgeräts (402) herausgezogen werden kann, um über die Kontaktschnittstelle den physischen Kontakt zwischen der bezeichneten Kontaktfläche (108, 308; 404) des tragbaren Kommunikationsgeräts (402) und einer bezeichneten Kontaktfläche (310; 406) des anderen tragbaren Kommunikationsgeräts (408) zu ermöglichen.

16. Tragbares Kommunikationsgerät (402) nach einem der Ansprüche 11 bis 13,
**dadurch gekennzeichnet, dass**
mindestens ein Teil der bezeichneten Kontaktfläche (108, 308; 404) des tragbaren Kommunikationsgeräts (402) in konvexer Form aus einer Außenfläche des tragbaren Kommunikationsgeräts (402) herausragt, um über die Kontaktschnittstelle den physischen Kontakt zwischen der bezeichneten Kontaktfläche (108, 308; 404) des tragbaren Kommunikationsgeräts (402) und einer bezeichneten Kontaktfläche (310; 406) des anderen tragbaren Kommunikationsgeräts (408) zu ermöglichen.

17. Kommunikationssystem (300; 400), welches mindestens ein erstes tragbares Kommunikationsgerät (402) und ein zweites tragbares Kommunikationsgerät (408) aufweist,
**dadurch gekennzeichnet, dass**
beide tragbaren Kommunikationsgeräte (402, 408) einem der Ansprüche 11 bis 16 zur Initialisierung einer sicheren Kommunikationssitzung zwischen den tragbaren Kommunikationsgeräten (402, 408) entsprechen.

## Revendications

1. Procédé destiné à lancer au moins partiellement une session de communication entre un premier dispositif (102, 302; 402) de communication et un deuxième dispositif (312; 408) de communication,
**caractérisé en ce que**,
l'étape de lancement d'une session de communication entre lesdits dispositifs (102, 302, 312 ; 402, 408) de communication, ayant chacun une surface (108, 308, 310 ; 404, 406) de contact dédiée, inclut l'étape de détection que la surface (108, 308 ; 404) de contact dédiée du premier dispositif (102, 302 ; 402) de communication et la surface (310 ; 406) de contact dédiée du deuxième dispositif (312 ; 408) de communication sont en contact physique l'une avec l'autre,
de sorte à permettre une communication sans fil entre lesdits premier (102, 302 ; 402) et deuxième (312 ; 408) dispositifs de communication.

2. Procédé selon la revendication 1,
**caractérisé en ce que**,
dans celui-ci, l'étape de lancement est effectuée par l'interface de contact entre la surface (108, 308 ; 404) de contact dédiée du premier dispositif (102, 302 ; 402) de communication et la surface (310 ; 406) de contact dédiée du deuxième dispositif (312 ; 408) de communication.

3. Procédé selon la revendication 2,
**caractérisé en ce que**,
l'étape de lancement comporte l'étape de négociation entre lesdits deux dispositifs (102, 302, 312; 402, 408) de communication afin de déterminer lequel des dispositifs prendra (étape 204) un rôle de lanceur.

4. Procédé selon la revendication 3,
**caractérisé en ce que**,
l'étape de négociation (étape 204) inclut une détermination duquel des dispositifs (102, 302, 312 ; 402, 408) prendra un rôle d'accepteur.

5. Procédé selon la revendication 4,
**caractérisé en ce que**, l'étape de lancement comporte l'étape (étape 206) d'échange d'une information d'authentification entre les deux dispositifs (102, 302, 312 ; 402, 408) de communication par laquelle l'un a un rôle de lanceur et l'autre un rôle d'accepteur.

6. Procédé selon l'une quelconque des revendications 1 à 5,
**caractérisé en ce que**,
il comporte l'étape de continuation de la session de communication par une interface sans fil entre lesdits deux dispositifs (102, 302, 312 ; 402, 408) de communication.

7. Dispositif (102, 302) de commande de communication destiné à lancer une session de communication sécurisée entre ledit dispositif (102, 302) de commande de communication et un autre dispositif (312) de commande de communication,
**caractérisé en ce que**,
le dispositif (102, 302) de commande de communication comporte :
- une surface (108, 308) de contact dédiée fournie pour mettre en contact physique une surface (310) de contact dédiée de l'autre dispositif (312) de commande de communication,
- un module (106, 306) de commande raccordé à la surface (108, 308) de contact dédiée lançant une communication en détectant un contact physique entre la surface (108, 308) de contact dédiée dudit dispositif (102, 302) de communication et la surface (310) de contact dédiée de l'autre dispositif (312) de commande de communication,
pour se raccorder à un module de communication sans fil afin de permettre une communication sans fil par une interface sans fil entre le module (104, 304) de communication sans fil associé audit dispositif (102, 302) de commande de communication et un module (314) de communication sans fil associé à l'autre dispositif (312) de commande de communication.

8. Dispositif (102, 302) de commande de communication selon la revendication 7,
**caractérisé en ce que**,
le dispositif de commande de communication comporte :
- le module (104, 304) de communication sans fil destiné à permettre une communication sans fil par l'interface sans fil entre le module (104, 304) de communication sans fil du dispositif (102, 302) de commande de communication et le module (314) de communication sans fil associé audit autre dispositif (312) de commande de communication,
dans lequel la surface (108, 308) de contact dédiée et le module (104, 304) de communication sans fil sont raccordés au module (106, 306) de commande.

9. Dispositif (102, 302) de commande de communication selon la revendication 7 ou 8,
**caractérisé en ce que**,
le module (106, 306) de commande lance une communication par l'interface de contact entre la surface (108, 308) de contact dédiée dudit dispositif (102, 302) de commande de communication et ladite surface (310) de contact dédiée de l'autre dispositif (312) de commande de communication.

10. Dispositif (102, 302) de commande de communication selon l'une quelconque des revendications 7 à 9,
**caractérisé en ce que**,
au moins une partie de la surface (108, 308) de contact dédiée du dispositif (102, 302) de commande de communication est à même de conduire un courant électrique.

11. Dispositif (402) de communication portable agencé pour communiquer avec au moins un autre dispositif (408) de communication portable,
**caractérisé en ce que**,
ledit dispositif (402) de communication portable comporte un module (106, 306) de commande de communication qui lance une session de communication sécurisée entre ledit dispositif (102, 302) de commande de communication conformément à la revendication 7 et un dispositif (312) de commande de communication de l'autre dispositif (408) de communication portable.

12. Dispositif (402) de communication portable selon la revendication 11,
**caractérisé en ce que**,
ledit module (104, 304) de communication sans fil est un module de technologie sans fil Bluetooth^{®}.

13. Dispositif (402) de communication portable selon la revendication 11 ou 12,
**caractérisé en ce que**
le dispositif (402) de communication portable est un téléphone mobile.

14. Dispositif (402) de communication portable selon l'une quelconque des revendications 11 à 13,
**caractérisé en ce que**,
au moins une partie de la surface (108, 308 ; 404) de contact dédiée du dispositif (402) de communication portable est saillante à partir d'une surface extérieure du dispositif (402) de communication portable pour permettre un contact physique entre la surface (108, 308; 404) de contact dédiée du dispositif (402) de communication portable et une surface (310; 406) de contact dédiée de l'autre dispositif (408) de communication portable.

15. Dispositif (402) de communication portable selon l'une quelconque des revendications 11 à 13,
**caractérisé en ce que**,
au moins une partie de la surface (108, 308 ; 404) de contact dédiée du dispositif (402) de communication portable peut être rendue saillante à partir d'une surface extérieure du dispositif (402) de communication portable afin de permettre un contact physique par l'interface de contact entre la surface (108, 308 ; 404) de contact dédiée du dispositif (402) de communication portable et une surface (310 ; 406) de contact dédiée de l'autre dispositif (408) de communication portable.

16. Dispositif (402) de communication portable selon l'une quelconque des revendications 11 à 13,
**caractérisé en ce que**,
au moins une partie de la surface (108, 308 ; 404) de contact dédiée du dispositif (402) de communication portable a une forme convexe à partir d'une surface extérieure afin de permettre un contact physique par l'interface de contact entre la surface (108, 308 ; 404) de contact dédiée du dispositif (402) de communication portable et une surface (310 ; 406) de contact dédiée de l'autre dispositif (408) de communication portable.

17. Système (300 ; 400) de communication comportant au moins un premier dispositif (402) de communication portable et un deuxième dispositif (408) de communication portable,
**caractérisé en ce que**,
les deux dispositifs (402, 408) de communication portables sont selon l'une quelconque des revendications 11 à 16, pour lancer une session de communication sécurisée entre lesdits dispositifs (402, 408) de communication portables.
